# EUROPÄISCHE PATENTSCHRIFT

(11) **EP 0 972 661 B1**
(45) Veröffentlichungstag und Bekanntmachung des Hinweises auf die Patenterteilung: **07.11.2001**
(21) Anmeldenummer: 99105802.5
(22) Anmeldetag: 23.03.1999
(51) Int. Cl.: B60H 1/00

(54) **Luftkanal für Grossraumfahrzeuge**
Air duct for large volume cars
Conduit d'aération pour véhicule à grand volume

(30) Priorität: 17.07.1998 DE 19831880
(43) Veröffentlichungstag der Anmeldung: 19.01.2000
(73) Patentinhaber: HAPPICH Fahrzeug- und Industrieteile GmbH, 42285 Wuppertal (DE)
(72) Erfinder: Celik, Fahri, 42283 Wuppertal (DE); Jäckel, Helmut, 42553 Velbert (DE)

(56) Entgegenhaltungen:
- EP-A- 0 529 263
- EP-A- 0 678 408
- DE-C- 4 300 713
- DE-C- 4 431 245

## Beschreibung

Die Erfindung bezieht sich auf einen Luftkanal für Großraumfahrzeuge, insbesondere Omnibusse, der im Oberbegriff des Anspruchs 1 angegebenen und aus DE-C-4 431 245 bekannten Art.

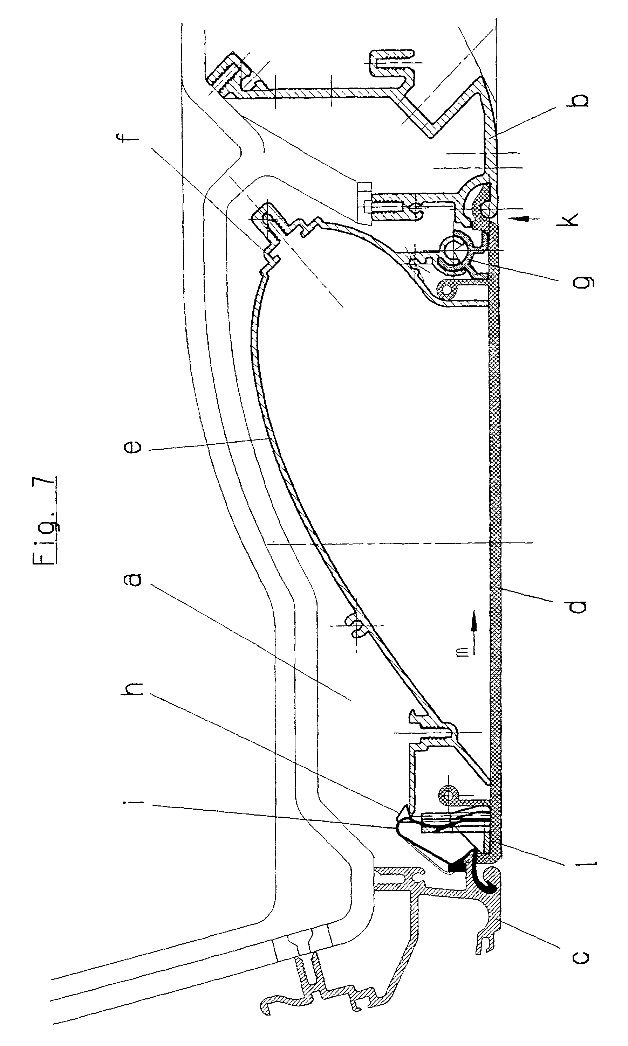

Oberhalb der Sitzreihen von Omnibussen ist es üblich, Kanäle zum Durchführen von Luft und auch von elektrischen oder dgl. Versorgungsleitungen anzuordnen. Die Luftkanäle dienen zur permanenten und je nach Fahrzeugausstattung auch zusätzlich zur Individualbelüftung, wozu dann Lüfterkombinationen zum Einsatz kommen. Auch werden die Luftkanäle herkömmlicherweise zur Unterbringung von Lautsprechern oder auch Beleuchtungseinrichtungen genutzt. Ein durch offenkundige Benutzung bekanntgewordener Luftkanal, der mit einer Deckenleuchte kombiniert ist, ist in Fig. 7 der anliegenden Zeichnungen gezeigt. Dabei ist ein innerer Luftkanal a zwischen einem ersten Luftkanalprofil b, einem zweiten Luftkanalprofil c und einem hier als Blendscheibe d dienenden Bodenprofil ausgebildet. Im einzelnen umfaßt der bekannte Luftkanal nach Fig. 7 eine Blendscheibe d, einen Reflektor e mit integriertem Glühlampenträger f, ein Schanierprofil g zwischen der Blendscheibe d und dem Reflektor e, erste Haltemittel h zur Festlegung des Reflektors e an der Blendscheibe d und zweite Haltemittel i zur Festlegung der aus Blendscheibe d und Reflektor e bestehenden Einheit am zweiten Luftkanalprofil c. Die Einheit ist zudem über eine Schamierausbildung k am ersten Luftkanalprofil b festgelegt. Die Haltemittel h und i bestehen aus Federstahl, die von an der Blendscheibe d geklebte Adapterelemente l aufgenommen sind. Die Adapterelemente 1 müssen separat gefertigt, mit den Halteelementen h und i bestückt und jeweils auf die Blendscheibe d geklebt werden, was sehr aufwendig und arbeitsintensiv ist. Bei der bekannten Vorrichtung ist aber auch das Scharnierprofil g ein separat gefertigtes Bauteil, das über eine Klebeverbindung an der Blendscheibe d festgelegt ist.

Ein besonderer Nachteil des bekannten Luftkanals besteht darin, daß die Blendscheibe d am Luftkanalprofil c über aus Federstahl gebildete Haltemittel i gehalten ist, deren Federkräfte nahezu ausschließlich in seitliche Richtung entsprechend dem Richtungspfeil m wirken. Dies ist zwar weniger gravierend, wenn im Luftkanal a, wie in Fig. 7 dargestellt ein Reflektor e aus Blech vorgesehen ist, der beim bekannten Luftkanal aus einem Aluminiumprofil besteht, welches Kräfte aufzunehmen vermag. Jedoch ist die Kraftkomponente m gravierend, wenn - wie bei Linienbussen üblich - der Reflektor e weggelassen wird. Dann nämlich kommt es zum Durchbiegen der Blendscheibe d, der man nur durch eine dickwandigere Gestaltung oder wie in der Praxis üblich durch auf die Blendscheibe d geklebte Querstreben entgegenwirken kann. Beide dieser Maßnahmen sind aufwendig und teuer.

Der Erfindung liegt daher ausgehend von einem Luftkanal der eingangs genannten Art die Aufgabe zugrunde, eine Luftkanalausbildung zu schaffen, mittels der eine Montage- und Einzelteilminimierung wie auch eine Gewichtsersparnis erreicht werden kann und mittels der seitlich wirkende Haltekräfte aufzuheben sind.

Zur Lösung dieser Aufgabe sind erfindungsgemäß die im Anspruch 1 angegebenen Maßnahmen vorgesehen. Die Unteransprüche geben vorteilhafte Ausgestaltungen und Weiterbildungen der Erfindung an.

Die besonderen Vorteile der erfindungsgemäßen Maßnahmen werden darin gesehen, daß die seitlich wirkenden Haltekräfte aufgehoben werden konnten mit dem Entfall von Verstärkungsstreben, daß der Einsatz von Haltemitteln in Form von Stahlfedern und damit die Herstellung von Adaptern und deren Klebeanordnung entfallen kann, daß die Herstellung und Klebeanordnung separater Scharnierprofile nicht mehr erforderlich ist und daß sich bei vereinfachter und verbilligter Herstellung auch ein verbesserter Toleranzausgleich ergibt.

Ausführungsbeispiele der Erfindung werden im folgenden anhand der Zeichnungen näher erläutert, und es zeigen:
- Fig. 1: einen Querschnitt eines Luftkanals in der Basisversion etwa folgend der Linie I - I in Fig. 3,
- Fig. 2: einen Querschnitt eines Luftkanals in einer gehobenen Ausführungsversion etwa folgend der Linie II - II in Fig. 4,
- Fig. 3: die Ansicht eines aus mehreren axial aneinandergesetzten Elementen bestehenden Luftkanals in Pfeilrichtung III nach Fig. 1 gesehen,
- Fig. 4: die Ansicht eines aus mehreren axial aneinandergesetzten Elementen bestehenden Luftkanals in Pfeilrichtung IV nach Fig. 2 gesehen,
- Fig. 5: einen Schnitt etwa folgend der Linie V - V in Fig. 3 und
- Fig. 6: einen Schnitt etwa folgend der Linie VI - VI in Fig. 4.

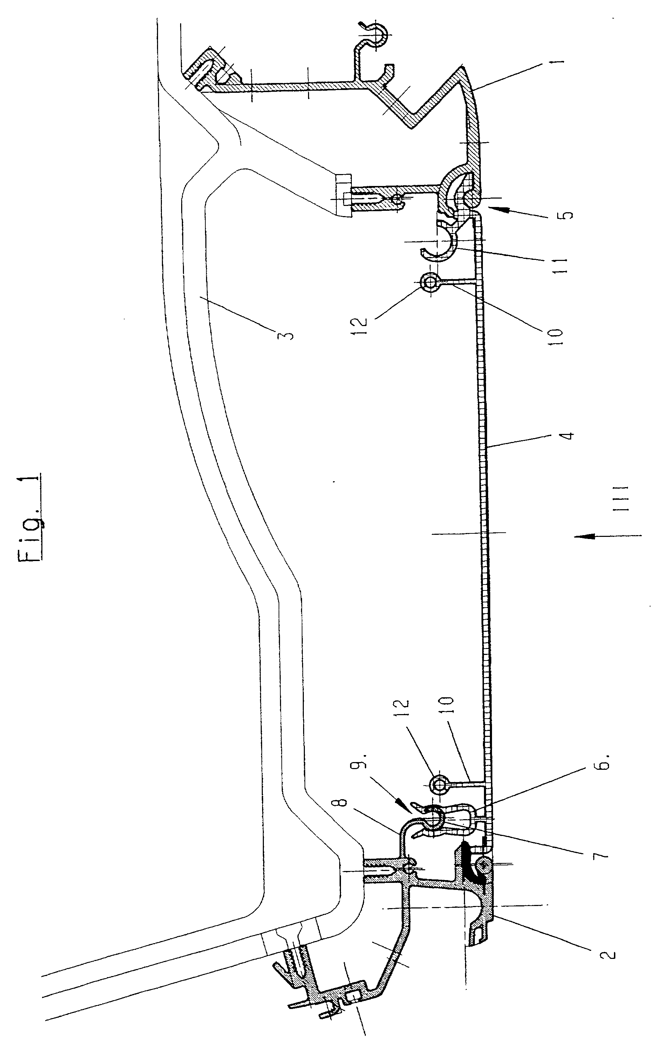

Fig. 1 zeigt einen Luftkanal, wie er in einem Omnibus oberhalb der linken und rechten Sitzreihen vorzusehen ist. Zum Luftkanal gehören ein erstes Luftkanalprofil 1, ein zweites Luftkanalprofil 2, eine Reihe von Luftkanalstützen 3 und ein zwischen den Luftkanalprofilen 1, 2 angeordnetes Bodenprofil 4. Während die Luftkanalprofile 1, 2 und die Luftkanalstützen 3 im wesentlichen herkömmlicher Ausbildung sind, ist das Bodenprofil 4 völlig neu konzipiert.

Das Bodenprofil 4 ist ein Kunststoff-Strangpreßprofil, das an einem Längsrand eine mit dem ersten Luftkanalprofil 1 zusammenwirkende Scharnierausbildung 5 aufweist. Als Haltemittel zum Festlegen des Bodenprofils 4 am zweiten Luftkanalprofil 2 ist an der Rückseite des Bodenprofils 4 eine etwa rechtwinklig zur Profilebene ausgerichtete zweiarmige Klammer 6 durchlaufend angeformt. Die zweiarmige Klammer 6 weist eine hinterschnittene Klipsaufnahme zum Einklipsen einer Kopfverdickung 7 auf, die an einem am zweiten Luftkanal 2 vorgesehenen Haltesteg 8 ausgebildet ist. Das Einklipsen wird durch ein relativ groß dimensioniertes Einführungsmaul 9 begünstigt, was bei etwaigen Bauteiltoleranzen wichtig ist. Zur Montage wird das Bodenprofil 4 lediglich in die Scharnierausbildung 5 eingehängt und hochgeschwenkt, wo es dann zum selbsttätigen Einrasten der Kopfverdickung 7 in der Klipsaufnahme kommt. Auf das Bodenprofil 4 wirken keine seitlichen Kräfte, so daß dasselbe relativ dünnwandig ausgebildet werden kann.

An der Rückseite des Bodenprofils 4 sind weiterhin zwei in der Nähe der Bodenprofil-Längsränder angeordnete Stege 10 und eine zum Anlenken eines Reflektors dienende Scharnierhälfte 11 jeweils durchlaufend angeformt. An den freien Enden der senkrecht zur Profilebene ausgerichteten Stege 10 befinden sich angeformte nach Art von Lageraugen ausgebildete Verdickungen 12.

Die Luftkanalausbildung nach Fig. 1 ist vornehmlich für Busse des öffentlichen Nahverkehrs mit relativ geringen Komfortansprüchen vorgesehen. Daher ist es nicht unbedingt erforderlich das Bodenprofil 4 aus einem lichtdurchlässigen Kunststoffmaterial auszubilden. Auch die Scharnierhälfte 11 könnte ggf. entfallen.

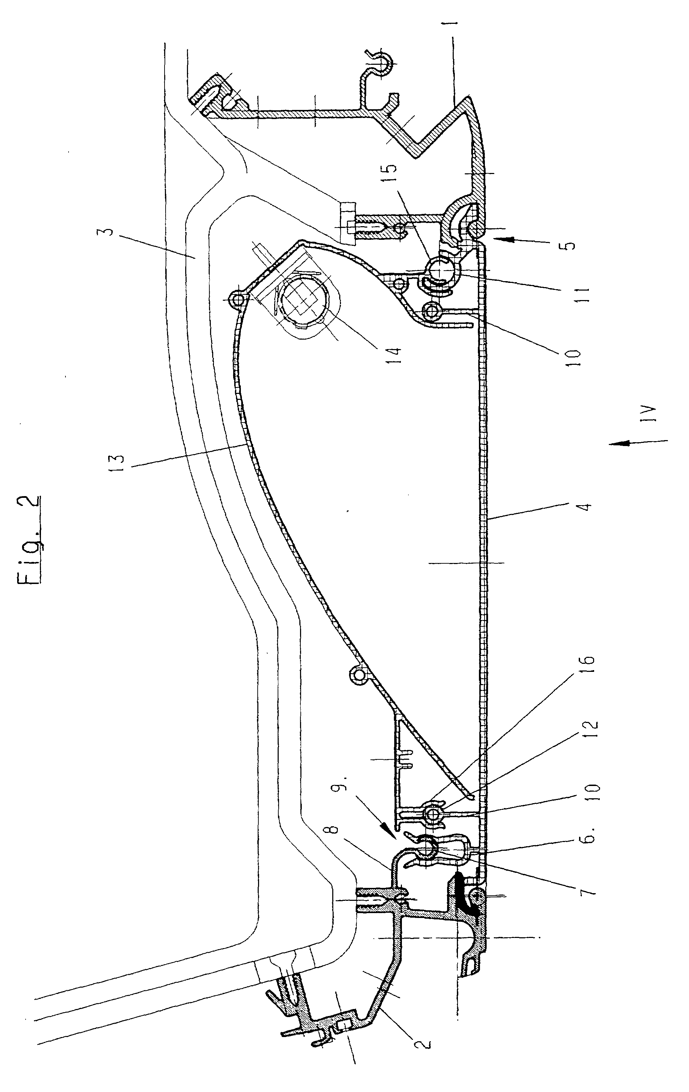

Anders ist es bei dem Luftkanal nach Fig. 2, der höheren Komfortansprüchen, wie für Reisebusse gefordert, genügen soll. Hier ist eine Kombination aus Luftkanal und Deckenleuchte vorgesehen. Dabei ist es grundsätzlich erforderlich, daß das Bodenprofil 4 aus einem transparenten bzw. lichtdurchlässigen Kunststoff-Material besteht. Im übrigen weist das Bodenprofil 4 aber eine anhand der Fig. 1 beschriebene Gestaltungsform auf, was insbesondere für die Scharnierausbildung 5, die zweiarmige Klammer 6, für die Stege 10 mit ihren Verdickungen 12 und für die gesamte Befestigungsanordnung gilt.

Bei der Ausführungsform nach Fig. 2 ist das Bodenprofil 4 mit einem Reflektor 13, der das Bodenprofil 4 bogenförmig überspannt, verbunden. Der Reflektor 13 ist ebenso wie das Bodenprofil 4 als Kunststoff-Strangpreßprofil ausgebildet und besteht zum Beispiel aus einem hell bzw. weiß eingefärbten Material. Der Reflektor 13 ist mit Lichtquellen 14 ausgestattet, trägt an einem Längsrand eine mit der Scharnierhälfte 11 des Bodenprofils 4 zusammenwirkende Scharnierhälfte 15 und ist am anderen Längsrand durchlaufend mit einer nach unten gerichteten zweiarmigen Klammer 16 mit einer hinterschnittenen Klipsaufnahme ausgebildet. Die Klipsaufnahme der Klammer 16 dient zum Einrasten und Haltern der Verdickung 12 des dem zweiten Luftkanalprofil 2 benachbarten Stegs 10. Bei nach unten geklappten Bodenprofil 4 kann die Klipsverbindung zwischen der Verdickung 12 und der zweiarmigen Klammer 16, ggf. unter Zuhilfenahme eines Werkzeugs gelöst werden um auf diese Weise einen Zugang zu den Lichtquellen 14 zu ermöglichen.

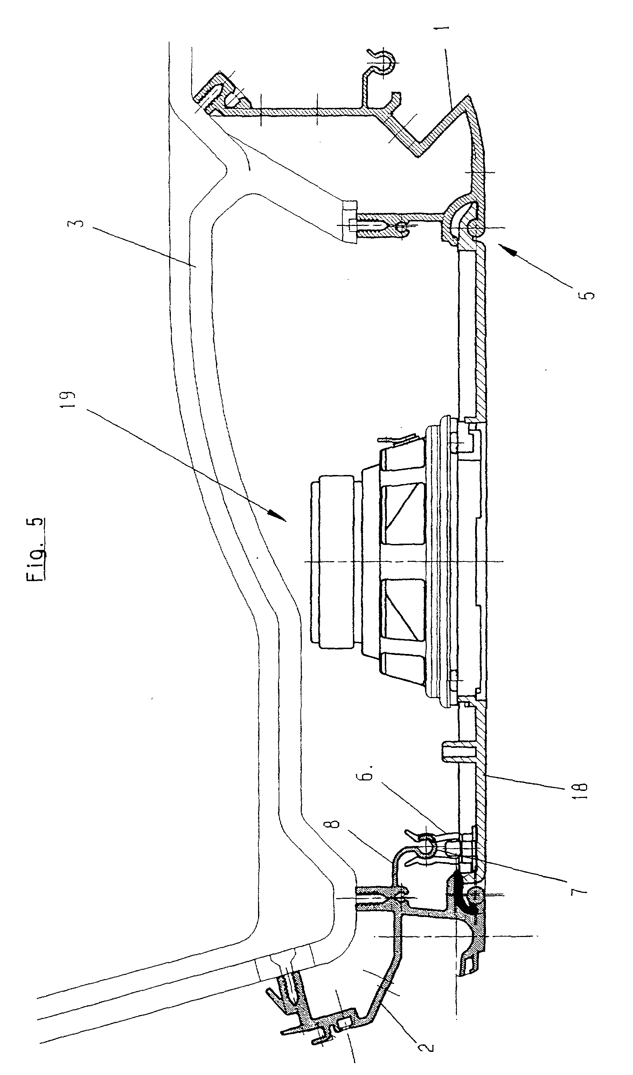

Der Luftkanal nach Fig. 1 kann hinsichtlich des Bodenprofils 4 in Fahrzeuglängsrichtung gesehen unterteilt sein und aus Bodenprofilabschnitten 17 mit dazwischen angeordneten Einbauelementen 18 bestehen. Das Einbauelement 18 ist, wie auch der Schnitt nach Fig. 5 zeigt, mit einem Lautsprecher 19, wie er auch für Linienbusse gefordert wird, bestückt.

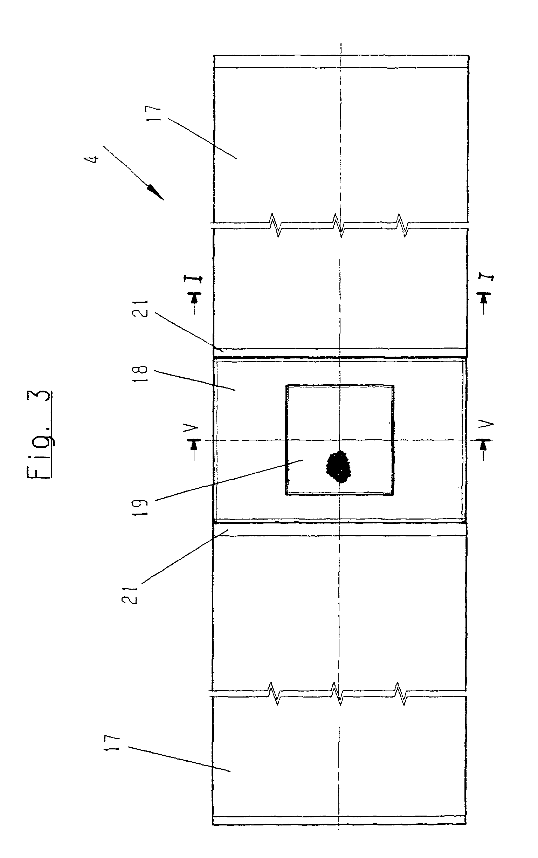

Das Einbauelement nach Fig. 3 und 5 besteht aus einem Kunststoff-Spritzgußteil, das an einem Längsrand eine der Scharnierausbildung 5 nach Fig. 1 und 2 entsprechende Scharnierausbildung 5 und am anderen Längsrand eine zweiarmige Klammer 6 aufweist, die der nach Fig. 1 und 2 entspricht. Damit kann das Einbauelement 18 ebenso einfach montiert und an den Luftkanalprofilen 1, 2 gehalten werden, wie auch das Bodenprofil 4.

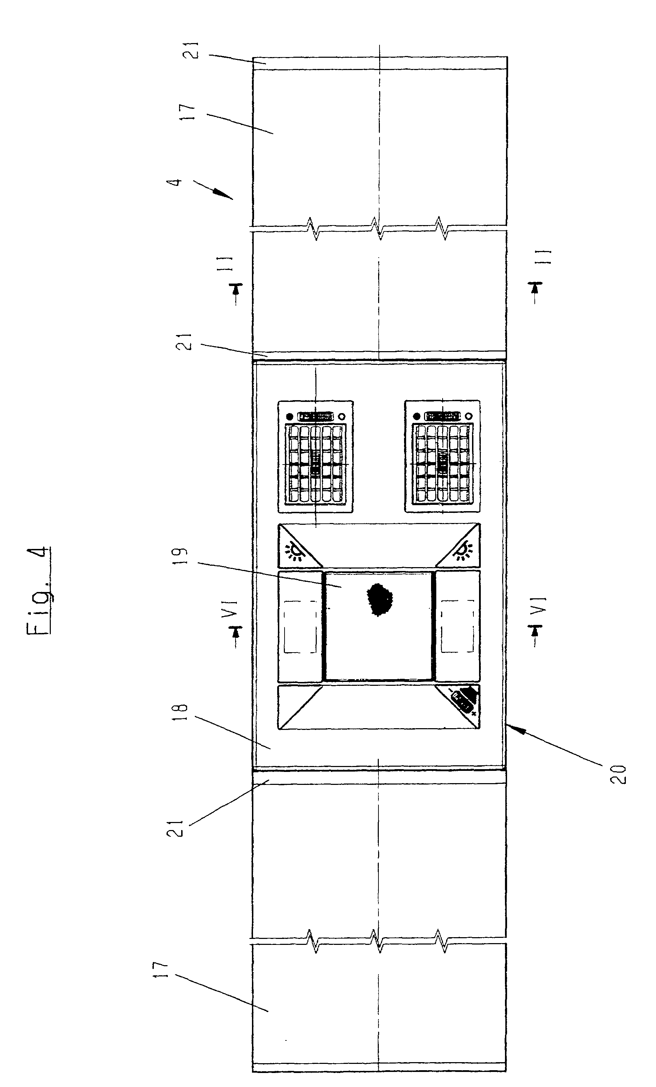

Auch der Luftkanal nach Fig. 2 ist zweckmäßigerweise entsprechend Fig. 4 unterteilt und besteht hinsichtlich des Bodenprofils 4 aus Bodenprofilabschnitten 17 mit dazwischen angeordneten Einbauelementen 18. Das Einbauelement 18 nach Fig. 4 ist mit einer sogenannten Lüfterkombination 20 bestückt, die für sich genommen bekannt ist und daher nicht näher zu erläutern ist. Im übrigen besteht das Einbauelement 18 (ohne Lüfterkombiantion 20) aus einem Kunststoff-Spritzgußteil mit einer der nach Fig. 5 entsprechenden Ausbildung.

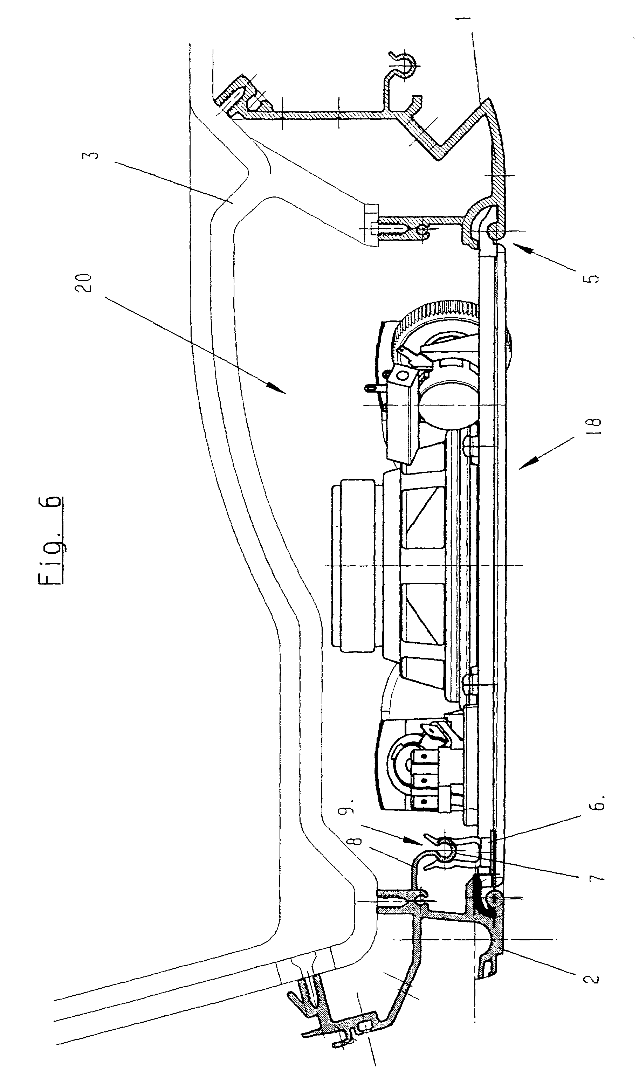

Luftkanäle, wie anhand der Fig. 2, 4 und 6 beschrieben, kommen bei Reisebussen mit erhöhten Komfortbedarf zum Einsatz, wobei über jeder Sitzreihe ein mit einer Lüfterkombination bestücktes Einbauelement 18 anzuordnen ist.

Die nach Art von Lageraugen ausgebildeten Verdickungen 12 der Stege 10 dienen auch zur Aufnahme von Befestigungsschrauben (nicht gezeigt), mittels denen an den Stirnenden der Bodenprofilabschnitte 17 Spaltabdeckungsprofile 21 festgelegt werden können. Die Spaltabdeckungsprofile 21 sind jeweils mit nicht gezeigten Bürstendichtungen versehen, womit ein Eindringen von Staub in den Luftkanal verhindert werden soll. Die Spaltabdeckungsprofile 21 wirken darüber hinaus auch toleranzausgleichend.

## Patentansprüche

1. Luftkanal für Großraumfahrzeuge, insbesondere Omnibusse, mit einem ersten und mit einem zweiten sich jeweils in Fahrzeuglängsrichtung erstreckenden Luftkanalprofil (1, 2) sowie mit einem, sich zwischen den Luftkanalprofilen (1, 2) ebenfalls in Fahrzeuglängsrichtung erstreckenden Bodenprofil (4), das mit einem ersten Längsrand an einem der Luftkanalprofile (1) angelenkt und mit dem zweiten Längsrand über Haltemittel lösbar an dem anderen Luftkanalprofil (2) befestigt ist, **dadurch gekennzeichnet, daß** das Bodenprofil (4) ein Kunststoff-Strangpreßprofil ist, an dessen Rückseite als Haltemittel eine etwa rechtwinklig zur Profilebene ausgerichtete zweiarmige Klammer (6) durchlaufend angeformt ist, wobei die zweiarmige Klammer (6) eine hinterschnittene Klipsaufnahme für eine Kopfverdickung (7) aufweist, die an einem Haltesteg (8) des der zweiarmigen Klammer (6) benachbarten Luftkanalprofils (2) ausgebildet ist.

2. Luftkanal nach Anspruch 1, **dadurch gekennzeichnet, daß** an der Rückseite des Bodenprofils (4) weiterhin zwei in der Nähe der Bodenprofil-Längsränder angeordnete Stege (10) durchlaufend angeformt sind, die etwa rechtwinklig zur Profilebene ausgerichtet sind und an ihren freien Enden jeweils eine runde, nach Art eines Lagerauges ausgebildete stangenförmige Verdickungen (12) tragen.

3. Luftkanal nach Anspruch 1 oder 2, **dadurch gekennzeichnet, daß** das Bodenprofil (4) in Fahrzeuglängsrichtung gesehen in Bodenprofilabschnitte (17) unterteilt ist und daß jeweils zwischen den Bodenprofilabschnitten (17) Einbauelemente (18) angeordnet sind, die hinsichtlich der Befestigungsanordnung an den Luftkanalprofilen (1, 2) dem Bodenprofil (4) entsprechen, also mit einem ersten Längsrand an einem der Luftkanalprofile angelenkt sind und am anderen Längsrand eine rückseitige, durchlaufend angeordnete zweiarmige Klammer (16) mit einer hinterschnittenen Klipsaufnahme für die Kopfverdickung (7) des Haltestegs (8) tragen.

4. Luftkanal nach wenigstens einem der vorangegangenen Ansprüche, **dadurch gekennzeichnet, daß** die Einbauelemente (18), die jeweils mit einem Lautsprecher (19) oder einer Lüfterkombination (20) oder dgl. bestückt sind, aus Kunststoff-Spritzgußteilen bestehen.

5. Luftkanal nach wenigstens einem der vorangegangenen Ansprüche, **dadurch gekennzeichnet, daß** das Bodenprofil (4) aus einem lichtdurchlässigen Kunststoffmaterial besteht und mit einem mit Lichtquellen (14) bestückten Reflektor (13), der das Bodenprofil (4) bogenförmig überspannt, verbunden ist, wobei der als Kunststoff-Strangpreßprofil ausgebildete Reflektor (13) mit einem Längsrand an einer Scharnierhälfte (11) des Bodenprofils (4) angelenkt ist und am anderen Längsrandbereich eine nach unten gerichtete zweiarmige Klammer (16) mit einer hinterschnittenen Klipsaufnahme aufweist, in die die Verdickung (12) eines der am Bodenprofil (4) angeformten Stege (10) eingreift.

6. Luftkanal nach wenigstens einem der vorangegangenen Ansprüche, **dadurch gekennzeichnet, daß** an jedem Stirnende der Bodenprofilabschnitte (17) ein mit einer Bürstendichtung oder dgl. versehenes Spaltabdeckungselement (21) befestigt ist, wobei die Befestigung mittels in die Lageraugen der Stegverdickungen (12) eindrehbarer Schrauben erfolgt.

## Claims

1. Air duct for large-capacity vehicles, in particular buses, having a first and second air duct profile (1, 2) extending in each case in the longitudinal direction of the vehicle, and having a base profile (4) which extends between the air duct profiles (1, 2) likewise in the longitudinal direction of the vehicle, is coupled by a first longitudinal edge to one of the air duct profiles (1) and is fastened by the second longitudinal edge releasably via retaining means to the other air duct profile (2), **characterized in that** the base profile (4) is a plastic extruded profile with a two-armed clip (6) which is aligned approximately at right angles with respect to the plane of the profile and is integrally formed continuously on the rear side of said extruded profile as the retaining means, the two-armed clip (6) having an undercut clip holder for a thickened head section (7) which is formed on a retaining web (8) of the air duct profile (2) adjacent to the two-armed clip (6).

2. Air duct according to Claim 1, **characterized in that** furthermore two webs (10) which are arranged in the vicinity of the base-profile longitudinal edges are integrally formed continuously on the rear side of the base profile (4), the said webs being aligned approximately at right angles with respect to the plane of the profile and on their free ends in each case bearing a round, rod-shaped thickened section (12) which is designed in the manner of a bearing eyelet.

3. Air duct according to Claim 1 or 2, **characterized in that** the base profile (4), as seen in the longitudinal direction of the vehicle, is divided into base-profile sections (17), and **in that** built-in elements (18) are arranged in each case between the base-profile sections (17), the said built-in elements corresponding to the base profile (4) as regards the fastening arrangement to the air duct profiles (1, 2), i.e. being coupled by a first longitudinal edge to one of the air duct profiles and on the other longitudinal edge bearing a rear-side, two-armed clip (16) which is arranged continuously and has an undercut clip holder for the thickened head section (7) of the retaining web (8).

4. Air duct according to at least one of the preceding claims, **characterized in that** the built-in elements (18), which are in each case fitted with a loudspeaker (19) or a fan combination (20) or the like, consist of plastic injection-moulded parts.

5. Air duct according to at least one of the preceding claims, **characterized in that** the base profile (4) consists of a translucent plastic material and is connected to a reflector (13) which is fitted with light sources (14) and spans the base profile (4) in a curved manner, the reflector (13), which is designed as a plastic extruded profile, being coupled by one longitudinal edge to one hinge half (11) of the base profile (4) and on the other longitudinal edge region having a downwardly directed, two-armed clip (16) having an undercut clip holder in which the thickened section (12) of one of the webs (10) integrally formed on the base profile (4) engages.

6. Air duct according to at least one of the preceding claims, **characterized in that** a gap-covering element (21) which is provided with a brush seal or the like is fastened to each end of the base-profile sections (17), the fastening being undertaken by means of screws which can be screwed into the bearing eyelets of the thickened web sections (12).

## Revendications

1. Conduit de ventilation pour véhicules de grand volume, en particulier des autobus, avec un premier et un deuxième profilé de conduit de ventilation (1, 2) qui s'étendent tous deux dans le sens de la longueur du véhicule, ainsi qu'avec un profilé de fond (4) qui s'étend entre les profilés de conduit de ventilation (1, 2), également dans le sens de la longueur du véhicule, qui est articulé par un premier bord longitudinal sur l'un des profilés de conduit de ventilation (1) et qui, par le deuxième bord longitudinal, est fixé de manière libérable à l'autre profilé de conduit de ventilation (2) à l'aide de moyens de retenue, **caractérisé en ce que** le profilé de fond (4) est un profilé en matière synthétique extrudée sur le côté arrière duquel une pince (6) à deux bras orientée sensiblement à la perpendiculaire du plan du profilé est formée de manière continue comme moyen de retenue, la pince (6) à deux bras présentant un logement d'accrochage élastique en contre-dépouille pour un bourrelet de tête (7) qui est formé sur une languette de retenue (8) du profilé de conduit de ventilation (2) voisin de la pince (6) à deux bras.

2. Conduit de ventilation selon la revendication 1, **caractérisé en ce qu'**en outre deux languettes (10) disposées à proximité des bords longitudinaux du profilé de fond sont formées de manière continue sur le côté dorsal du profilé de fond (4), sont orientées sensiblement à la perpendiculaire du plan du profilé et portent chacune à leur extrémité libre un bourrelet (12) rond en forme de tige, configuré à la manière d'un oeillet de montage.

3. Conduit de ventilation selon la revendication 1 ou 2, **caractérisé en ce que** vu dans le sens de la longueur du véhicule, le profilé de fond (4) est divisé en tronçons (17) de profilé de fond, et **en ce qu'**entre les tronçons (17) de profilé de fond sont disposés à chaque fois des éléments de montage (18) qui correspondent au profilé de fond (4) en ce qui concerne l'agencement de fixation aux profilés de conduit de ventilation (1, 2) et qui donc sont articulés par un premier bord longitudinal à l'un des profilés de conduit de ventilation et par l'autre bord longitudinal portent une pince (16) à deux bras continue disposée du côté dorsal, avec un logement d'accrochage élastique en contre-dépouille pour le bourrelet de tête (7) de la languette de retenue (8).

4. Conduit de ventilation selon au moins l'une des revendications précédentes, **caractérisé en ce que** les éléments de montage (18), qui sont chacun équipés d'un haut-parleur (19) ou d'une combinaison de ventilateur (20) ou similaire, sont constitués de pièces en matière synthétique extrudée.

5. Conduit de ventilation selon au moins l'une des revendications précédentes, **caractérisé en ce que** le profilé de fond (4) est réalisé en un matériau synthétique transparent et est relié à un réflecteur (13) équipé de sources de lumière (14) qui chevauche le profilé de fond (4) en forme d'arc, le réflecteur (13) configuré comme profilé en matière synthétique extrudée étant articulé par un bord longitudinal sur une moitié de charnière (11) du profilé de fond (4) et présentant sur l'autre bordure longitudinale une pince (16) à deux bras orientée vers le bas et présentant un logement d'accrochage élastique en contre-dépouille dans lequel s'engage le bourrelet (12) de l'une des languettes (10) formées sur le profilé de fond (4).

6. Conduit de ventilation selon au moins l'une des revendications précédentes, **caractérisé en ce qu'**à chaque extrémité frontale des tronçons de profilé de fond (17) est fixé un élément de recouvrement d'interstice (21) doté d'un joint d'étanchéité en brosse ou similaire, la fixation s'effectuant au moyen de vis aptes à être vissées dans les oeillets de montage des bourrelets (12) des languettes.
